# EUROPÄISCHE PATENTANMELDUNG

(11) **EP 4 428 382 A1**
(43) Veröffentlichungstag der Anmeldung: **11.09.2024**
(21) Anmeldenummer: 23160148.5
(22) Anmeldetag: 06.03.2023
(51) Int. Cl.: F16C 19/36, F16C 33/58, F16C 32/06

(54) **GETRIEBELAGERUNG FÜR EINE WINDKRAFTANLAGE**

(71) Anmelder: Flender GmbH, 46395 Bocholt (DE)
(72) Erfinder: KÖNIG, Christian, 46395 Bocholt (DE); GETTLER, Ralf, 46395 Bocholt (DE)
(74) Vertreter: Michalski Hüttermann & Partner Patentanwälte mbB

(57) **Zusammenfassung**

Die Erfindung betrifft eine Maschinenanordnung 10 zum drehenden Übertragen einer Antriebsleistung, umfassend ein Gehäuseelement 12, 46, ein Rotationselement 14 und zumindest eine Wälzlageranordnung 16, wobei das Rotationselement 14 über die zumindest eine Wälzlageranordnung 16 mit auf einer inneren und einer äußeren Lagerlaufbahn 18 abrollenden Wälzkörpern 20 in dem Gehäuseelement 12, 46 um eine Drehachse A_{D} drehbar gehalten ist. Zumindest eine der Lagerlaufbahnen 18 ist durch einen den jeweiligen Wälzkörpern 20 zugewandten Strukturbereich 22 des Gehäuseelements 12, 120 und/oder des Rotationselements 14, 118 gebildet. Die Lagerlaufbahn ist inhärenter Bestandteil eines Lagerdeckels 42 der Wälzlageranordnung 16.

## Beschreibung

Die Erfindung betrifft eine Maschinenanordnung zur drehenden Übertragung einer Antriebsleistung, umfassend ein Gehäuseelement, ein Rotationselement und zumindest eine Wälzlageranordnung, wobei das Rotationselement über die zumindest eine Wälzlageranordnung mit auf einer inneren und einer äußeren Lagerlaufbahn abrollenden Wälzkörpern in dem Gehäuseelement um eine Drehachse A_{D} drehbar gehalten ist.

Bei dem Rotationselement kann es sich beispielsweise um eine ein Drehmoment übertragende Welle oder auch um einen in einem Getriebegehäuse umlaufenden Planetenträger handeln. Ein Antriebsstrang, der derartige Komponenten einschließt, kann beispielsweise in einer Windkraftanlage im Kraftfluss zwischen einem Rotor und einem Generator liegen. Der Antriebsstrang enthält in der Regel ein Planentengetriebe zur Übertragung eines Antriebsmoments von dem Rotor auf den Generator. Lagerungen von Planetenträgern in Gehäusen solcher Planetengetriebe sind entweder mit Zylinderrollenlagern oder in jüngster Zeit mit Kegelrollenlagern ausgeführt. Insbesondere auf der drehmomentführenden Seite des Planetenträgers entsteht im Sitz des Lagerrings eine Kerbe, die den Planetenträger schwächt und die Drehmomentübertragung begrenzt. Dies steht einer fortlaufenden Steigerung der Leistungsdichte eines solchen Antriebsstrangs und der verbauten Komponenten entgegen.

Für die Auswahl des Wälzlagers für die Lageranordnung ist regelmäßig nicht last- und lebensdauerbezogenen Dimensionierung ausschlaggebend, sondern die maßliche bzw. geometrische Dimensionierung. Der Grund hierfür besteht, dass der Durchmesser des rotorseitigen Wälzlagers größer sein muss als der Flanschdurchmesser des vom Rotor über die Hauptwelle angetriebenen Planetenträgers, um das Wälzlager aus Richtung des Rotors montieren zu können. Die gleiche Überlegung gilt für das generatorseitige Wälzlager und dessen Montierbarkeit.

Die verbauten Wälzlager stellen für die Getriebe einen erheblichen Kostenfaktor dar. Durch die Notwendigkeit Lagersitze zur Aufnahme der Lagerringe in den Planetenträger und die Gehäusekomponenten zu integrieren, entstehen strukturelle Kerben, die insbesondere beim Planetenträger als kritische Bereiche hoher Belastung bekannt sind. Um die Kerbwirkungen zu verringern, müssen insbesondere auf der drehmomentführenden Seite große Radien im Planetenträger vorgesehen werden, um die Lagersitze zur Aufnahme der Lagerringe anzuordnen. Durch diese Radien erhöht sich der notwendige axiale und radiale Bauraum für die Getriebe.

Über zumindest einen der Lageraußenringe wird bei einer Paarung aus Wälzlagern zudem die Lagervorspannung oder ein Lagerspiel eingestellt. Für die Lagerringe wird bei diesen ein hochwertiger und teurer Lagerstahl eingesetzt, wobei durch die Verwendung dünnerer Lagerringe der Kostennachteil zumindest teilweise kompensiert werden kann. Sowohl die weichen Strukturen als auch die dünnwandigen Lagerringe führen vermehrt dazu, dass das Phänomen des Lagerringwanderns, insbesondere der äußeren Lagerringe, gegenüber der umgebenden Struktur auftritt. Als Abhilfemaßnahme kann beispielsweise eine formschlüssige Verdrehsicherung vorgesehen werden. Aber auch hier ist bei weiter steigender Leistungsdichte zu erwarten, dass eine formschlüssige Verdrehsicherung die steigenden Wanderkräfte nicht mehr aufnehmen kann und die zunehmend dünnwandigeren Lagerringe nicht mehr ausreichend Material bieten beispielsweise eine Passfedernut aufzunehmen. Es besteht folglich ein Bedürfnis insbesondere im Bereich der Lagerringe der steigenden Leistungsdichte adäquat Rechnung zu tragen und dabei insbesondere das Phänomen des Lagerringwandern zu berücksichtigen, und zwar unter Beibehaltung einer praktikablen Möglichkeit der Lagereinstellung.

Es ist die Aufgabe der Erfindung Maßnahmen aufzuzeigen, die bei fortbestehender Einstellbarkeit des Lagers ein Lagerringwandern vermeiden.

Die Lösung der Aufgabe erfolgt durch eine Maschinenanordnung mit den Merkmalen des Anspruchs 1. Bevorzugte Ausgestaltungen sind in den Unteransprüchen und der nachfolgenden Beschreibung angegeben, die jeweils einzeln oder in Kombination einen Aspekt der Erfindung darstellen können. Wenn ein Merkmal in Kombination mit einem anderen Merkmal dargestellt wird, dient dies nur der vereinfachten Darstellung der Erfindung und soll keinesfalls bedeuten, dass dieses Merkmal nicht auch ohne das andere Merkmal eine Weiterbildung der Erfindung sein kann.

Eine Ausführungsform betrifft eine Maschinenanordnung zum drehenden Übertragen einer Antriebsleistung, umfassend ein Gehäuseelement, ein Rotationselement und zumindest eine Wälzlageranordnung, wobei das Rotationselement über die zumindest eine Wälzlageranordnung mit auf einer inneren und einer äußeren Lagerlaufbahn abrollenden Wälzkörpern in dem Gehäuseelement um eine Drehachse A_{D} drehbar gehalten ist, wobei das Gehäuseelement jeweilige den Wälzkörpern zugewandte Strukturbereiche aufweist und die Lagerlaufbahnen durch einen integral mit dem jeweiligen Strukturbereich verbundenen Werkstoff gebildet sind und
ein Lagerdeckel der Wälzlageranordnung den die äußere Lagerlaufbahn bildenden Strukturbereich umfasst.

Der Begriff Maschinenanordnung ist breit zu verstehen. Es ist ein Gehäuseelement vorgesehen, bei dem es sich um einen Gehäusedeckel, einen Anschlussflansch, ein drehmomentabstützendes Bauteil, ein rohr- bzw. röhrenartiges Bauteil oder dergleichen handeln kann. Das Gehäuseelement kann mehrteilig ausgeführt sein und muss nicht zwingend bezüglich eines Bodens absolut unbeweglich angeordnet sein; es kann beispielsweise dreh- oder schwenkbar gegenüber einem Boden angeordnet sein. Bei dem Rotationselement kann es sich beispielsweise um eine Welle, eine Hohlwelle, ein käfigförmiges und drehendes Antriebselement, z.B. Antriebsflansch, einen Planetenträger oder dergleichen handeln. Die Wälzlageranordnung kann als angestellte und unter einer Vorspannung montierte Lagerpaarung vorgesehen sein. Die Wälzlageranordnung kann auch als gepaarter Lagersatz zur einseitigen Lagerung ausgeführt sein. Für das Gehäuseelement und das Rotationselement kann auch vorgesehen sein, dass es sich um ineinander geschachtelte Rotationselemente handelt.

Unter einem Strukturbereich des Gehäuseelements bzw. des Rotationselements wird zumindest ein tragender Bereich des jeweiligen Elements verstanden. Ein Strukturbereich kann einen Bereich umfassen, der mittels eines additiven Fertigungsverfahren an bzw. in die Struktur des Gehäuseelements bzw. des Rotationselements angefügt wurde. Bei einem Gehäuseelement kann es sich bei einem Strukturbereich beispielsweise um einen Gehäusewandungsbereich handeln. Wenn das Gehäuseelement eine Gehäusebohrung ausbildet, kann die die Gehäusebohrung umgebende Bohrungswandung als Strukturbereich bezeichnet werden. Bei einem Rotationselement, wenn es ich bei diesem beispielsweise um eine Welle oder einen Antriebflansch handelt, wird der Strukturbereich von einem Bereich gebildet, über den das Rotationselement gegenüber dem Gehäuseelement gehalten, aufgenommen, gelagert oder geführt ist.

Eine Lagerlaufbahn ist die Fläche eines Bauteils auf der bei dem Einsatz von Wälzkörpern diese unmittelbar abrollen. Eine Lagerlaufbahn umfasst also zumindest eine Abrollbahn, auf der Wälzkörper zum Abrollen vorgesehen sind. Die eigentliche Lagerlaufbahn ist gegenüber dem Bauteil, auf oder an dem sie sich befindet, sehr dünn gehalten. Eine Lagerlaufbahn umfasst neben der zumindest einen Abrollbahn auch einen Tiefenbereich, der unter der Oberfläche der Abrollbahn liegt und in dem Druckeigenspannungen oberhalb einer bestimmten Mindesthöhen in einer Betriebssituation herrschen. Bei jeder der hier beschriebenen Ausgestaltungen ist zumindest eine Lagerlaufbahn inhärenter Bestandteil des Strukturbereichs des Gehäuseelements oder alternativ oder zusätzlich des Rotationselements. Lagerlaufbahn und Strukturelement sind einstückig miteinander verbunden und können nicht zerstörungsfrei voneinander getrennt werden. Es reicht nicht aus, wenn die Oberfläche des Strukturelements bspw. durch Einsatzhärten oder Aufkohlen gehärtet ist, da dies zwar zu einer anderen chemischen Zusammensetzung als die Grundstruktur führt, allerdings nicht zu einem mit dem Strukturelement verbundenen anderen Material.

Indem die Lagerlaufbahn inhärenter Bestandteil eines Strukturelements des Gehäuseelements oder des Rotationselements verglichen mit herkömmlich eingesetzten Lagerringen ist, hat eine Funktionsintegration der Abrolleigenschaften, wie bspw. Wälzfestigkeit, eines diskreten Wälzlagers, insbesondere eines diskreten Lagerrings, mit den Eigenschaften des Gehäuseelement oder des Rotationselements stattgefunden. Es ergibt sich in vorteilhafter Weise die Möglichkeit zu einer Steigerung der Leistungsdichte und zwar infolge der geringeren radialen Bauhöhe und des geringeren Gewichts durch den Entfall des diskreten Lagerrings. Zudem ist von Vorteil, dass der Lagerdeckel den die äußere Lagerlaufbahn bildenden und durch additive Fertigung hergestellten Strukturbereich umfasst, so dass unmittelbar über den Lagerdeckel eine Einstellung der Lageranordnung, d.h. der Lagervorspannung oder des Lagerspiels, erfolgen kann. Ein weiterer Vorteil besteht darin, dass kein Lagerringwandern mehr stattfinden kann, da die Lagerlaufbahnen inhärenter Bestandteil eines Strukturbereichs sind. Zudem ergibt sich auch eine Kostenersparnis, da nur noch ein verminderter Einsatz von hochpreisigern Lagerstahl erforderlich ist. Zudem reduziert sich die Anzahl an Arbeitsschritten in der Montage, da pro Lagerlaufbahn zwei Passungen entfallen und der Montageaufwand für enge Passungen entfällt. Durch die reduzierte Anzahl an Arbeitsschritten und weniger Bauteilschnittstellen, die in jedem einzelnen Fall das Risiko falsch ausgelegter bzw. falsch gefertigter Lagersitze und -bohrungen in sich bergen, ergibt sich ein verringertes Fehlerrisiko bzw. Ausfallrisiko.

In einer bevorzugten Ausgestaltung ist der Lagerdeckel bezüglich seiner axialen Position zu dem Gehäuseelement einstellbar. Hierüber kann der Lagerdeckel in eine axiale Position gegenüber dem Gehäuseelement gebracht werden, in der die erforderliche bzw. gewünschte Lagervorspannung bzw. das Lagerspiel sich einstellt. In einer konkret bevorzugten Ausgestaltung ist zur Einstellung der axialen Position des Lagerdeckels dieser durch spanende Bearbeitung der Anlagefläche zum Gehäuseelement nachbearbeitet. Alternativ kann zur Einstellung der axialen Position des Lagerdeckels zumindest ein Distanzelement vorgesehen sein, das zwischen dem Lagerdeckel und dem Gehäuseelement platziert ist. Ein derartiges Distanzelement ist zweckmäßigerweise rund ausgeführt und hat einen Durchmesser in der gleichen Größenordnung wie das Wälzlager, zu dessen Einstellung er dient. Das Distanzelement kann einteilig oder mehrteilig ausgeführt sein. Bevorzugt ist das Distanzelement als Distanzring zwischen einer Anlageschulter des Lagerdeckels mit integrierter Laufbahn und einem Anlageflansch des Gehäuseelements ausgeführt.

Die äußere Lagerlaufbahn ist durch einen integral mit dem Strukturbereich des Lagerdeckels verbundenen Werkstoff gebildet. Hier lässt sich über den Werkstoff in dem Strukturbereich eine Lagerlaufbahn mit einer erhöhten Wälzfestigkeit erzeugen. In einer konkreten Ausgestaltung kann vorgesehen sein, dass der Werkstoff auf den Strukturbereich additiv aufgebracht ist. Ein additives Aufbringen von Material auf den Strukturbereich kann beispielsweise durch Laserauftragsschweißen, Kaltgasspritzen und/oder Thermisches Spritzen erfolgen. Hierbei ist insbesondere bevorzugt, wenn ein Werkstoff mit einer erhöhten Wälzfestigkeit zu Einsatz kommt. Ein additiv aufgebrachter, aber dennoch integral mit dem Strukturbereich verbundener Werkstoff erlaubt eine gezielte Anpassung der Lagereigenschaften des Gesamtbauteils an die jeweiligen Anforderungen.

In einer bevorzugten fertigungstechnisch bezogenen Ausgestaltung hat der auf den Strukturbereich aufgebrachte Werkstoff eine die Oberflächenhärte beeinflussende Materialbehandlung erfahren. Durch die Materialbehandlung erfolgt beispielsweise ein Härten über eine lokal wirksame Wärmebehandlung. Auch ein Warmwalzen kann durchgeführt werden.

In einer weiterhin bevorzugten Ausgestaltung bildet der Lagerdeckel einen in axialer Richtung zwischen das Gehäuseelement und die Wälzkörper ragenden und umfänglich verlaufenden Bund aus, wobei die äußere Lagerlaufbahn an dem Bund gebildet ist.

Die Aufgabe wird zudem gelöst durch einen Antriebsstrang für eine Windkraftanlage zur drehmomentübertragenden Verbindung eines Rotor mit einem Generator, umfassend eine Hauptlagereinheit mit einem Lagergehäuse und einer Hauptwelle und ein über die Hauptwelle angetriebenes Getriebe, wobei das Getriebe den Generator zumindest mittelbar antreibt und ein als Getriebegehäuse ausgebildetes Gehäuseelement und zumindest ein als Planetenträger ausgebildetes Rotationselement aufweist, wobei Getriebegehäuse, der zumindest eine Planetenträger und die Wälzlageranordnung als Maschinenanordnung nach einer der oben beschriebenen Ausführungsformen ausgebildet sind. In konkret möglichen Ausgestaltungen ist der Lagerdeckel der Wälzlageranordnung auf der dem Rotor zugewandten Seite des Getriebes oder auf der dem Generator zugewandten Seite des Getriebes angeordnet.

Gleichermaßen wird die Aufgabenstellung gelöst durch eine Windkraftanlage, mit einem Rotorflansch mit einem Rotor und einem Generator, wobei ein an einem Maschinenträger gehaltener und den Rotorflansch mit dem Generator verbindender Antriebsstrang vorgesehen ist und der Antriebsstrang wie zuvor beschrieben ausgebildet ist.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:
Fig. 1: eine schematische Darstellung einer Windkraftanlage in einer ersten Ausführung und
Fig. 2: eine Detaillierung einer Lagerausgestaltung in einem Getriebe für eine Windkraftanlage nach Fig. 1.

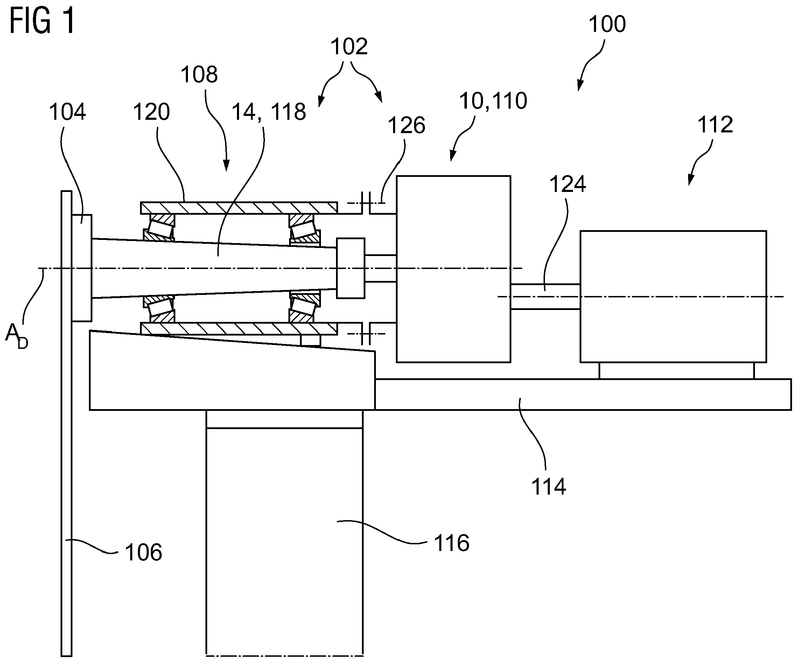

Die Figur 1 zeigt in schematischer und nicht maßstabsgetreuer Darstellung eine Windkraftanlage 100 in einer möglichen Ausführung. Wesentliches Element der Windkraftanlage 100 ist ein Antriebstrang 102, der vorliegend strukturell einen Rotorflansch 104 mit einem Rotor 106, eine Hauptlagereinheit 108, ein Getriebe 110 und einen Generator 112 umfasst. Über einen Maschinenträger 114 werden zumindest die Hauptlagereinheit 108 und der Generator 112 über einen Turm 116 gegenüber dem, nicht dargestellten, Boden abgestützt. Die Hauptlagereinheit 108 umfasst eine Hauptwelle 118, die über eine Wälzlageranordnung 16 gegenüber einem Lagergehäuse 120 der Hauptlagereinheit 108 drehbar um eine Drehachse D gelagert ist. An einem Ende der Hauptwelle 118 ist der Rotorflansch 104 und an diesem der Rotor 106 gehalten. Das andere Ende der Hauptwelle 118 ist über eine Kupplung 122 antriebsmäßig mit dem Getriebe 110 verbunden, um ein von dem Rotor 106 aufgebrachtes Antriebsmoment bzw. eine Antriebsleistung in das Getriebe 110 einzuleiten. Das Getriebe 110 kann als Planetengetriebe mit einer oder mehreren Planetenstufen ausgeführt sein und die Maschinenanordnung 10 umfassen. Das Getriebe 110 ist über eine Generatorwelle 124 antriebsmäßig mit dem Generator 112 verbunden. Über die Generatorwelle 124 kann das Getriebe 110 die Antriebsleistung an den Generator 112 abgeben. Über einen Flansch 126 ist das Lagergehäuse 120 mit dem Getriebe 110 verbunden. Ein Reaktionsmoment des Getriebes 110 ist über den Flansch 126 gegenüber dem Maschinenträger 114 abgestützt.

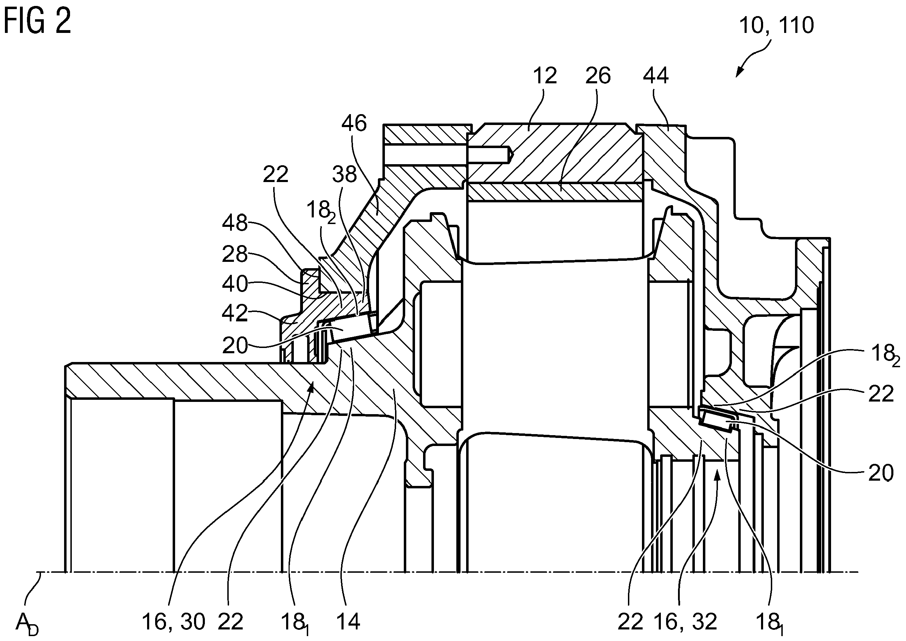

Die Figur 2 zeigt eine Detaillierung des in der Figur 1 lediglich strukturell dargestellten Getriebes 110. Das Getriebe 110 ist als Planetengetriebe ausgeführt, von dem lediglich eine Planetenstufe dargestellt ist. Das Getriebe 110 umfasst eine Maschinenanordnung 10, die wiederum ein Gehäuseelement 12 und ein Rotationselement 14 des Getriebes 110 umfasst. Das Gehäuseelement 12 kann mehrteilig ausgeführt sein; es kann beispielsweise einen mit diesem über Verschraubungen verbundenen ersten und zweiten Gehäuseflansch 44 und 46 umfassen. Bei dem Rotationselement 14 kann es sich beispielsweise um einen Planetenträger der ersten Planetenstufe handeln. Das Rotationselement 14 ist über eine Wälzlageranordnung 16 mit auf Lagerlaufbahnen 18 abrollenden Wälzkörpern 20 in dem Gehäuseelement 12 um die Drehachse A_{D} drehbar gehalten. Das als Planetenträger ausgebildete Rotationselement 14 trägt nicht dargestellte Planetenräder, die nach radial außen mit einer Innenverzahnung 26 und nach radial innen mit einem ebenfalls nicht dargestellten Sonnenrad kämmen. Das Rotationselement 14 steht eingangsseitig, d.h. in der gezeigten Darstellung links, in einer Antriebsverbindung mit der zu Figur 1 beschriebenen Hauptwelle 118.

In der Figur 2 ist eine Ausgestaltung der Maschinenanordnung 10 gezeigt, bei der die Wälzlageranordnung 16 ein erstes Wälzlager 30 und ein zweites Wälzlager 32 aufweist. Die Wälzlager 30, 32 sind als Kegelrollenlager ausgeführt. Lagerlaufbahnen 18 der Wälzlager 30, 32 werden durch einen den jeweiligen Wälzkörpern 20 zugewandten Strukturbereich 22 des Gehäuseelements 12 und des Rotationselements 14 gebildet. Eine innere Lagerlaufbahn 18₁ des ersten Wälzlagers 30 ist durch einen Strukturbereich 22 des Rotationselements 14, d.h. des Planetenträgers, gebildet. Zudem ist eine innere Lagerlaufbahn 18₁ des zweiten Wälzlagers 32 ebenfalls durch einen Strukturbereich 22 des Rotationselements 14 gebildet und eine äußere Lagerlaufbahn 18₁ des Wälzlagers 32 ist durch einen Strukturbereich 22 des Gehäuseelements 12 gebildet.

Zu dem ersten Wälzlager 30 ist ein Lagerdeckel 42 vorgesehen, der die äußere Lagerlaufbahn 18₂ umfasst. Der Lagerdeckel 42 bildet einen umfänglich verlaufenden Bund 38 aus, der in axialer Richtung zwischen das Gehäuseelement 46 und die Wälzkörper 20 ragt. Die äußere Lagerlaufbahn 18₂ ist an dem Bund 38 gebildet. Über den Bund 38 sitzt der Lagerdeckel des ersten Wälzlagers axial in einem Zentriersitz 40 des Gehäuseelements 46 ein. Über die axiale Positionierung des Lagerdeckels 42 gegenüber dem Gehäuseelement 46 kann eine Lagervorspannung bzw. ein Lagerspiel der Wälzlageranordnung 16 eingestellt werden.

In der in Figur 2 gezeigten Ausgestaltung der Maschinenanordnung 10 ist der Lagerdeckel 42 auf einer die Antriebsleistung aufnehmende Seite angeordnet. Vorliegend ist dies in der Darstellung die linke Seite. Alternativ kann der Lagerdeckel 42 auch der die Antriebsleistung abgebende Seite der Maschinenanordnung 10 angeordnet sein, was in der vorliegenden Darstellung die rechte Seite wäre. Auf eine eigene Darstellung dieser alternativen Anordnung des Lagerdeckels 42 wird verzichtet. Weiterhin alternativ können zwei Lagerdeckel 42 vorgesehen werden, von denen einer antriebsseitig und einer abtriebsseitig angeordnet ist.

Zur Einstellung der axialen Position des Lagerdeckels 42 wird der Lagerdeckel 42 an der Anlageschulter 28 durch spanende Bearbeitung der Anlagefläche zum Gehäuseelement 46 nachbearbeitet, wodurch die axiale Position des Lagerdeckelbundes 38, in den die Lagerlaufbahn 18₂ integriert ist, eingestellt wird. Zur Einstellung der axialen Position des Lagerdeckels 42 kann alternativ zumindest ein Distanzelement 48 vorgesehen sein, dass zwischen dem Lagerdeckel 42 und dem Gehäuseelement 46 einsitzt. Das Distanzelement 48 kann als Distanzring zwischen eine Anlageschulter 28 des Lagerdeckels 42 und einem Anlageflansch 46 des Gehäuseelements ausgeführt sein.

Die Lagerlaufbahnen 18₁, 18₂, die durch den jeweiligen Strukturbereich 22 des Gehäuseelements 46 oder des Rotationselements 14 gebildet werden, sind durch einen integral mit dem Strukturbereich 22 verbundenen Werkstoff gebildet. Der Werkstoff ist additiv auf den Strukturbereich 22 aufgebracht. Es kann vorgesehen sein, dass der auf den Strukturbereich 22 aufgebrachte Werkstoff vor Inbetriebnahme eine die Oberflächenhärte beeinflussende bzw. erhöhende Materialbehandlung erfahren hat. Weiterhin kann vorgesehen sein, dass die Lagerlaufbahnen 18 einen oder mehrere Lagerborde ausbilden.

### Bezugszeichenliste

- 10: Maschinenanordnung
- 12: Gehäuseelement
- 14: Rotationselement
- 16: Wälzlageranordnung
- 18: Lagerlaufbahn
- 20: Wälzkörper
- 22: Strukturbereich
- 26: Innenverzahnung
- 28: Anlageschulter
- 30: Wälzlager
- 32: Wälzlager
- 38: Bund
- 40: Zentriersitz
- 42: Lagerdeckel
- 44: Gehäuseflansch
- 46: Gehäuseflansch
- 48: Distanzelement
- 100: Windkraftanlage
- 102: Antriebstrang
- 104: Rotorflansch
- 106: Mehrblattrotor
- 108: Hauptlagereinheit
- 110: Getriebe
- 112: Generator
- 114: Maschinenträger
- 116: Turm

## Patentansprüche

1. Maschinenanordnung (10) zur drehenden Übertragung einer Antriebsleistung, umfassend
ein Gehäuseelement (12), ein Rotationselement (14) und zumindest eine Wälzlageranordnung, wobei das Rotationselement (14) über die zumindest eine Wälzlageranordnung (16) mit auf einer inneren und einer äußeren Lagerlaufbahn (18) abrollenden Wälzkörpern (20) in dem Gehäuseelement (12, 44, 46) um eine Drehachse A_{D} drehbar gehalten ist,
wobei das Gehäuseelement (12, 44, 46) jeweilige den Wälzkörpern (20) zugewandte Strukturbereiche (22) aufweist und die Lagerlaufbahnen (18) durch einen integral mit dem jeweiligen Strukturbereich (22) verbundenen Werkstoff gebildet sind und
ein Lagerdeckel (42) der Wälzlageranordnung (16) den die äußere Lagerlaufbahn (18) bildenden Strukturbereich (22) umfasst.

2. Maschinenanordnung (10) nach Anspruch 1, **dadurch gekennzeichnet, dass** der Lagerdeckel (42) bezüglich seiner axialen Position zu dem Gehäuseelement (12, 44, 46) einstellbar ist.

3. Maschinenanordnung (10) nach Anspruch 2, **dadurch gekennzeichnet, dass** zur Einstellung der axialen Position des Lagerdeckels (42) eine Anlagefläche einer Anlageschulter (28) des Lagerdeckels (42) zum Gehäuseelement (12, 44, 46) durch mechanische Nachbearbeitung während der Montage angepasst wird.

4. Maschinenanordnung (10) nach Anspruch 2, **dadurch gekennzeichnet, dass** zur Einstellung der axialen Position des Lagerdeckels (42) ein Distanzelement (48) zwischen einer Anlageschulter (28) des Lagerdeckels (42) und einem Gehäuseflansch (44, 46) des Gehäuseelements (12) einsitzt.

5. Maschinenanordnung (10) nach einem der Ansprüche 1 bis 4, **dadurch gekennzeichnet, dass** der Lagerdeckel (42) auf einer die Antriebsleistung aufnehmende Seite oder auf einer die Antriebsleistung abgebende Seite der Maschinenanordnung (10) angeordnet ist.

6. Maschinenanordnung (10) nach einem der Ansprüche 1 bis 5, **dadurch gekennzeichnet, dass** der Werkstoff auf den Strukturbereich (22) additiv aufgebracht ist.

7. Maschinenanordnung (10) nach Anspruch 6, **dadurch gekennzeichnet, dass** der auf den Strukturbereich (22) aufgebrachte Werkstoff eine die Oberflächenhärte beeinflussende Materialbehandlung erfahren hat.

8. Maschinenanordnung (10) nach Anspruch 6 oder 7, **dadurch gekennzeichnet, dass** der Werkstoff, im Vergleich zu einem Grundmaterial des Strukturbereichs (22), eine erhöhte Wälzfestigkeit aufweist.

9. Maschinenanordnung (10) nach einem der Ansprüche 1 bis 8, **dadurch gekennzeichnet, dass** der Lagerdeckel (42) einen in axialer Richtung zwischen das Gehäuseelement (12, 46) und die Wälzkörper (20) ragenden und umfänglich verlaufenden Bund (38) ausbildet, wobei die äußere Lagerlaufbahn (18₂) an dem Bund gebildet ist.

10. Antriebsstrang (102) für eine Windkraftanlage (100) zur drehmomentübertragenden Verbindung eines Rotors (106) mit einem Generator (112), umfassend eine Hauptlagereinheit (108) mit einem Lagergehäuse (120) und einer Hauptwelle (118) und ein über die Hauptwelle (118) angetriebenes Getriebe (110), wobei das Getriebe (110) den Generator zumindest mittelbar antreibt und ein als Getriebegehäuse ausgebildetes Gehäuseelement (12) und zumindest einen als Rotationselement ausgebildeten Planetenträger (14) aufweist, **dadurch gekennzeichnet, dass** Getriebegehäuse (12), der zumindest eine Planetenträger (14) und die Wälzlageranordnung (16) als Maschinenanordnung (10) nach einem der vorangegangenen Ansprüche ausgebildet sind.

11. Antriebsstrang nach Anspruch 10, **dadurch gekennzeichnet, dass** der Lagerdeckel der Wälzlageranordnung (16) auf der dem Rotor (106) zugewandten Seite des Getriebes (110) oder auf der dem Generator (112) zugewandten Seite des Getriebes (110) angeordnet ist.

12. Windkraftanlage (100), umfassend einen Rotorflansch (104) mit einem Rotor (106) und einen Generator (112), wobei ein an einem Maschinenträger (114) gehaltener und den Rotorflansch (104) mit dem Generator (112) verbindender Antriebsstrang (102) vorgesehen ist, **dadurch gekennzeichnet, dass** der Antriebsstrang (102) nach Anspruch 10 oder 11 ausgebildet ist.
